# EUROPEAN PATENT APPLICATION

(11) **EP 1 160 911 A1**
(43) Date of publication of application: **05.12.2001**
(21) Application number: 00111486.7
(22) Date of filing: 29.05.2000
(51) Int. Cl.: H01Q 1/24, H01Q 1/32, H01Q 21/28, H04B 1/38

(54) **Additional antenna RF switch in a mobile terminal for a wireless telecommunication system**

(71) Applicant: Sony International (Europe) GmbH, 10785 Berlin (DE)
(72) Inventor: Rauch, Stefan, c/o Sony Int. (Europe) GmbH, 85609 Ascheim (DE)
(74) Representative: Körber, Martin, Dipl.-Phys.

(57) **Abstract**

The present invention relates to a mobile terminal for a wireless telecommunication system comprising a first antenna (12), a connector (20) for connecting a second antenna (14) to the terminal, and first switch means (22) for selectively connecting an output stage (10) of the terminal to the first antenna (12) or the connector (20). To improve isolation between the first antenna (12) and the output stage (10) when the first switch means (22) are switched to the second antenna (14), second switch means (26) are arranged in series between the first switch means (22) and the first antenna (12) for selectively connecting the first antenna (12) to the first switch means (22) or disconnecting the first antenna (12) from the first switch means (22). Preferably, the second switch means (26) are formed of a PIN diode.

## Description

The present invention relates to a mobile terminal for a wireless telecommunication system.

Conventionally, many mobile terminals for a wireless telecommunication system, e.g. the GSM system, comprise a first, built in antenna often referred to as an internal antenna and a connector for connecting a second, external antenna to the terminal. Sometimes it is desired to use the terminal in a car, where it is power-supplied from the car's battery and operated with a car-mounted antenna as the external antenna. In this case, for reasons of health and electromagnetic radiation compatibility technical directives in many countries allow the mobile terminal to radiate high frequency power into the passenger compartment of the car only up to a certain maximum limit. One such directive is the European Commission Directive 95/94/EC, for example. To achieve the given limitations, the terminal's internal antenna has to be isolated well enough from the output stage of the terminal, so as to minimize the RF power radiated from the internal antenna.

Normally in mobile terminals, separation between the internal antenna and external antenna is done by an antenna switch which enables to selectively connect the terminal's output stage to the internal antenna or the external antenna connector. However, it has been found that when operating the terminal at high power levels the isolation characteristic of commonly used antenna switches is often not sufficient to meet the requirements of internal antenna isolation.

It is therefore an object of the invention to reduce undesired radiation from the terminal's internal antenna when operating the terminal with an external antenna.

This object is achieved by a mobile terminal for a wireless telecommunication system according to claim 1, comprising:
a first antenna,
a connector for connecting a second antenna to said terminal,
first switch means for selectively connecting an output stage of said terminal to said first antenna or said connector, and
second switch means arranged in series between said first switch means and said first antenna for selectively connecting said first antenna to said first switch means or disconnecting said first antenna from said first switch means.

When operating the terminal with the first (e.g. internal) antenna the second switch means are in a closed condition so as to establish an electrical connection between the first switch means and the first antenna. When the first switch means is switched to the second (e.g. external) antenna, the second switch means opens and the connection between the first switch means and the first antenna is interrupted. Even if in high power operation of the terminal RF signals from the output stage leak over the first switch means into a circuit path extending towards the first antenna, these signals are (at least substantially) blocked at the second switch means and are not radiated from the first antenna. In this way, an enhanced isolation of the first antenna is achieved.

To keep electromagnetic leakage as low as possible it is advantageous to arrange the first and second switch means at a spatial distance from each other.

Impedance transforming effects of RF transmission lines may be used to optimize isolation of the first antenna. Exceptional results can be obtained if the first and second switch means are separated by a transmission line having a length of approximately λ/4, wherein λ is the wavelength of a signal propagating along said transmission line. An open circuit at the second switch means is then transformed by the λ/4 transmission line into a short circuit at the first switch means.

In conventional mobile terminals the antenna switch for switching between the internal antenna and the external antenna is often a mechanical type switch which is integrated into the external antenna connector. It works automatically simply by inserting or removing the plug of an antenna cable. This means that there is no control signal needed for actuating the antenna switch. In turn, this means that conventional mobile terminals usually do not provide any switch control signal, at all, which might be used to control the second switch means of the inventive terminal. A preferred embodiment of the invention is therefore provided with a switch control circuit for detecting an electric signal indicative of a switching state of said first switch means and for controlling said second switch means in accordance with said detected electric signal. In this way, a control signal for controlling the second switch means is derived from the actual position of the first switch means.

In order to detect the actual position of the first switch means the switch control circuit may detect, as said electric signal, a d.c. signal on a circuit path extending over the first switch means. In this embodiment, the circuit path is opened and closed in response to actuation of the first switch means. As a result, d.c. currents and d.c. potentials along the circuit path change in response to actuation of the first switch means. In this way, one can easily derive the actual position of the first switch means from the signal value of a suitably chosen d.c. signal occurring along the circuit path.

In principal, the second switch means may be of a mechanical type. At least one semiconductor switching member is preferred, though. This allows miniaturization and little space requirement of the second switch means. In particular, a PIN diode may be used as the switching member. Suitable PIN diodes having nearly a pure ohmic forward impedance and a very small reverse capacitance are available in the market. However, other semiconductor devices are also conceivable as the switching member, e.g. a RF transistor or a GaAs switch.

The PIN diode may be used for transmitting RF signals both in a transmit mode and a receive mode of said terminal. In the transmit mode, when operating the terminal at a high power level (e.g. 2 W) the PIN diode needs to be biased with a relatively high forward bias current (e.g. 5 - 10 mA) to minimize harmonic distortion when the transmit power travels over the PIN diode. In the receive mode the forward bias current can be much smaller (e.g. around 1 mA) since the level of the received power is much lower. Then, a bias control circuit for applying a forward bias and a reverse bias to the PIN diode may advantageously be adapted for applying a larger forward bias to the PIN diode in the transmit mode and a smaller forward bias in the receive mode. In this way, a low power consumption of the terminal can be achieved which is an important requirement when the terminal is supplied from a battery.

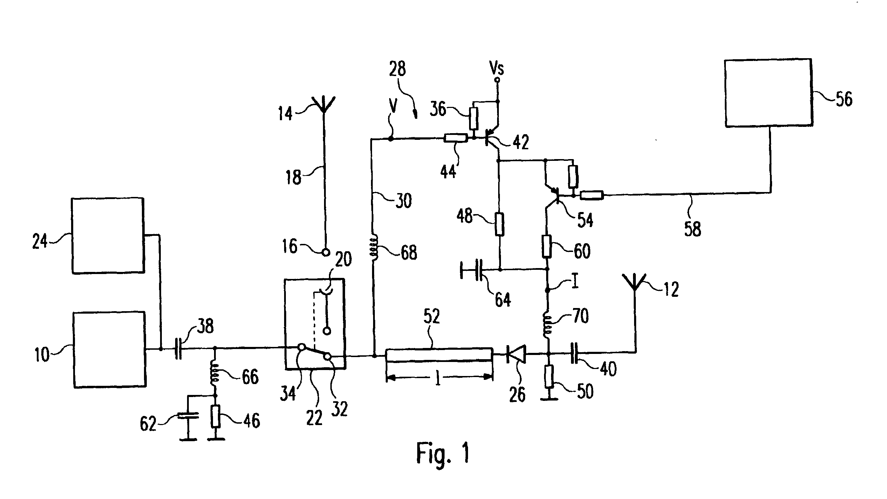

Next, a preferred embodiment of the present invention will be explained in more detail with reference to a circuit diagram illustrated in the enclosed only figure 1.

In the circuit diagram shown in figure 1, a power amplifier 10 of an output stage of a mobile terminal (e.g. a mobile telephone) for a wireless telecommunication system (e.g. the GSM system or the UMTS system) outputs RF signals which are to be transmitted by an antenna 12 built into the terminal or an external antenna 14 connectable to the terminal. The external antenna 14 may be, e.g., a car-mounted antenna. In order to connect the external antenna 14 to the terminal a plug 16 of an antenna cable 18 has to be inserted into a connector 20 of the terminal. An antenna switch 22 enables to switch between the built-in antenna 12 and the external antenna 14. The antenna switch 22 can be a mechanical or an electronic switch. In case of an electronic switch, it can be formed of one or more PIN diodes, for example. However, in the embodiment shown, it is a mechanical switch which is integrally formed with the connector 20 and switches automatically in response to inserting and removing the plug 16.

An input stage for processing RF signals received by either of the built-in antenna 12 and external antenna 14 is designated by 24.

At a GSM transmit frequency of 900 MHz, the isolation of commonly available mechanical switches is limited to a maximum of around 33dB. When the antenna switch 22 is switched to the external antenna 14 and the terminal operates at the highest GSM output power level, which is 33 dBm = 2 W, then a RF power of around 0 dBm (1 mW) travels over the antenna switch 22 and is presented to the built-in antenna 12. This level of RF power radiated from the antenna 12 may cause problems with respect to electromagnetic radiation compatibility, e.g. when the terminal is integrated into a car.

To improve the isolation of the antenna 12 from the output amplifier 10, when the antenna switch 22 is switched to the external antenna 14, a second switch 26 is added in series between the antenna switch 22 and the antenna 12. In its closed state the additional switch 26 allows RF signals to pass without any substantial attenuation. In its open state the additional isolation effect of the switch 26 provides for an overall isolation of the antenna 12 from the output amplifier 10 which is sufficient to meet the above requirements as to low car-internal radiation.

The additional switch 26 is controlled by a switch control circuit generally designated by 28. The switch control circuit 28 detects a signal indicative of the actual position of the antenna switch 22 and generates a control signal for the switch 26 based on the detected signal. To detect the actual position of the antenna switch 22, the switch control circuit 28 comprises a circuit path 30 supplied from a d.c. voltage Vs and extending over the antenna switch 22 to ground. In particular, the circuit path 30 extends over an output 32 of the antenna switch 22 allocated to the antenna 12 and an input 34 of the antenna switch 22 allocated to the output amplifier 10. When the antenna switch 22 is switched to the external antenna 14, i.e. switch's input 34 and output 32 are not connected, an electric potential V on the circuit path 30 is high. On the other hand, when the antenna switch 22 is switched to the antenna 12, i.e. switch's input 34 and output 32 are connected, the electric potential V is low, due to a current flowing through a high ohmic pull-up resistor 36 to ground and causing a voltage drop across resistor 36. Thus, the value of the electric potential V indicates the switching state of the antenna switch 22. The switch control circuit 28 converts the electric potential V into a current I which works the additional switch 26.

Two d.c. blocking capacitors 38, 40 prevent external circuitries from affecting the d.c. levels of the switch control circuit 28.

To convert the electric potential V into the current I, the switch control circuit 28 comprises a pnp transistor 42. The emitter of transistor 42 is fixed to the supply voltage Vs, the transistor's base is connected to the circuit path 30 and "sees" over an ohmic resistor 44 the potential V. For d.c. signals, the input 34 of the antenna switch 22 is pulled to ground by an ohmic resistor 46. A further ohmic resistor 48 serves for limiting the current I.

In the embodiment shown, a PIN diode with a low series resistance and a low forward bias current is used to realize the additional switch 26. When the antenna switch 22 closes the way between the antenna switch's input 34 and output 32, a low voltage is applied to the base of transistor 42. Therefore, transistor 42 goes to a conducting state, so that a current can flow through resistor 48, PIN diode 26, switch 22 and resistor 46 to ground. That is, when the antenna switch 22 is switched to the antenna 12, a forward bias current is applied to the PIN diode 26, so the switch realized by the PIN diode 26 is closed.

On the other hand, when the external antenna 14 is connected to the connector 20, the path between input 34 and output 32 of the antenna switch 22 is opened. Now, the transistor's base is connected over resistor 36 to Vs. So, the transistor 42 is in an isolating state, and no current flows through the PIN diode 26. The diode's anode is pulled to ground by an ohmic resistor 50, while a high voltage is applied to its cathode over resistors 44 and 36. Thus, when the antenna switch 22 is switched to the external antenna 14, a reverse bias voltage is applied to the PIN diode 26; the switch realized by the PIN diode 26 is open.

To achieve maximum isolation between antenna 12 and output amplifier 10 when switch 22 is switched to external antenna 14 and switch 26 is open, it is preferred to keep a certain distance 1 between both switches 22, 26. Separating the switches 22, 26 by a transmission line 52 having a length 1 of around one quarter wavelength has proven to give excellent results. The transmission line can also be replaced by an inductor.

A further pnp transistor 54 permits selection between a larger forward bias current flowing through the PIN diode 26 in a transmit mode of the terminal and a smaller forward bias current in a receive mode of the terminal. Transistor 54 is controlled by a transmit/receive control signal coming from a central control unit 56 of the terminal on a control line 58. In conventional mobile terminals, the transmit/receive control signal is a commonly available signal, so no additional circuitry is needed to derive such signal. In a conducting state of transistor 54, an ohmic resistor 60 in parallel connection to resistor 48 becomes effective, so the overall resistance seen by the current I is smaller than in an isolating state of transistor 54. As a result, the current flowing through the PIN diode 26 is larger in the conducting state of transistor 54 than in the isolating state thereof. For example, by suitably chosing the values of resistors 48, 50 and 60 a forward bias current in the transmit mode of about 5 - 10 mA and in the receive mode of around 1 mA can be set. In this way, harmonic distortions which might occur at large transmit power levels can be minimized in the transmit mode and current can be saved in the receive mode.

The value of resistor 46 advantageously will be chosen such as to limit the current when a voltage source is plugged into the connector 20 by accident. The value of resistor 50 would be chosen much larger than that of resistor 46 to ensure that most of the bias current flows through the PIN diode 26 and is not deviated over resistor 50 to ground.

Capacitors 62 and 64 and inductors 66, 68 and 70 all serve for decoupling RF components from d.c. components and for stabilizing the circuit against resonating.

## Claims

1. Mobile terminal for a wireless telecommunication system, comprising:
a first antenna (12),
a connector (20) for connecting a second antenna (14) to said terminal,
first switch means (22) for selectively connecting an output stage (10) of said terminal to said first antenna (12) or said connector (20), and
second switch means (26) arranged in series between said first switch means (22) and
said first antenna (12) for selectively connecting said first antenna (12) to said first switch means (22) or disconnecting said first antenna (12) from said first switch means (22).

2. Mobile terminal according to claim 1,
**characterized in that** said first and second switch means (22, 26) are arranged at a spatial distance from each other.

3. Mobile terminal according to claim 1 or 2,
**characterized in that** said first and second switch means (22, 26) are separated by a transmission line (52) having a length of approximately λ/4, wherein λ is the wavelength of a signal propagating along said transmission line (52).

4. Mobile terminal according to anyone of claims 1 to 3,
**characterized by** a switch control circuit (28) for detecting an electric signal indicative of a switching state of said first switch means (22) and for controlling said second switch means (26) in accordance with said detected electric signal.

5. Mobile terminal according to claim 4,
**characterized in that** said switch control circuit (28) detects, as said electric signal, a d.c. signal on a circuit path (30) extending over said first switch means (22).

6. Mobile terminal according to anyone of claims 1 to 5,
**characterized in that** said second switch means (26) comprise at least one semiconductor switching member.

7. Mobile terminal according to claim 6,
**characterized in that** said switching member (26) is a PIN diode.

8. Mobile terminal according to claim 7,
**characterized in that** said PIN diode (26) is used for transmitting RF signals both in a transmit mode and a receive mode of said terminal, a bias control circuit (28) for applying a forward bias and a reverse bias to said PIN diode (26) being adapted for applying a larger forward bias to said PIN diode (26) in said transmit mode and a smaller forward bias in said receive mode.

9. Mobile terminal according to claim 6,
**characterized in that** said switching member (26) comprises a GaAs switch.
